# EUROPEAN PATENT APPLICATION

(11) **EP 1 063 253 A1**
(43) Date of publication of application: **27.12.2000**
(21) Application number: 99112160.9
(22) Date of filing: 24.06.1999
(51) Int. Cl.: C08G 64/18, C08G 64/14, C08G 64/20, C08G 63/64, C08G 81/02, C08L 69/00, C08F 8/14, C08F 10/00, E04D 3/35

(54) **Light diffusing block copolycarbonates**

(71) Applicant: Bayer Aktiengesellschaft, 51368 Leverkusen (DE)
(72) Inventor: Marek, Miroslav, Dr., 47800 Krefeld (DE); Bruder, Friedrich-Karl, Dr., 47800 Krefeld (DE); Douzinas, Konstadinos, Dr., 51061 Köln (DE)

(57) **Abstract**

The invention describes a copolymer with at least one mono- or α,ω-dihydroxypolyolefine and at least one polycarbonate where the content of polyolefine segment is in the range 0,005- 60 wt.%, methods of preparation and the use of compositions containing the copolymer for light diffusion.

## Description

The invention describes a copolymer with at least one mono- or α,ω-dihydroxy-polyolefine and at least one polycarbonate where the content of polyolefine segment is in the range 0,005- 60 wt.%, methods of preparations and the use of compositions containing the copolymer for light diffusion.

Light diffusing polymers have found a main application field in the lighting bodies and as a material for sunroofs, especially for industrial buildings. These polymers are able to scatter the light more or less regularly all over the room. Moreover, translucent roofs made from polycarbonate protect against sun irradiation and eliminate shortcomings typical for glass reinforced by metal wires (it is difficult to cut) [DE 4437312 A1], [DE 2251708].

Light diffusing materials are also an excellent choice for use in projection systems as a method for hiding scratches or imperfections in a rear projection screen such as TV screens or thin layer electric decoration sheets [US 5170287].

Other applications of light diffusing polymers are luminaries, illuminated signs esp. backlit translucent signs, skylight, automotive sunroofs, covers for automotive lights etc.

In order to render scattering of light in polycarbonates, inorganic additives and pigments are commonly incorporated into the polymer matrix. Particles of BaSO₄ and TiO₂ are frequently used for this purpose, ZnO, ZnS, CdS, CaCO₃ were also applied. White pigments like TiO₂, ZnO, ZnS decrease the light transmission so much that it limits they application range as a lighting material. When the pigment concentration is decreased, no significant scattering occurs and the material remains transparent [DE 2019325].

Another serious problem consists in a decrease of molecular weight of polycarbonate samples filled by inorganic fillers, esp. TiO₂ It was observed that this degradation depends on the type of the inorganic pigment and its concentration. It is believed that inorganic pigments are involved in such degradation reactions carried out during injection molding, especially when traces of water (e.g. from air humidity) are present in the polymer. The decrease of molecular weight might have a negative impact on mechanical and other properties of the polymer. When 1,5 wt.% of TiO₂ in polycarbonate matrix is used, then 0,15-0,2 wt% of water in polycarbonate is enough to cause degradation of the matrix [DE 2019325].

Inorganic particles are difficult to disperse evenly and, since they are hard and irregularly ground, they tended to abrade the processing equipment. Moreover, molded articles produced from such composition have an uneven surface. Pits and holes, caused by large particle size of BaSO₄, can be there observed [EP 269324, EP 634445].

Some of the above mentioned shortcomings (especially matrix degradation, rough surface etc.) can be overcome by replacing inorganic scattering agents by organic particles based on various polymers, especially on polyalkylmethacrylates and polyalkylacrylates [EP 269324, US 5237004]. On the other hand such systems show poor matrix-particle physical strength and poor dispersions, both resulting from absence of strong adhesion forces or bindings between these two phases [US 5237004 and EP 269324].

In order to avoid the above mentioned shortcomings originated in rough, unevenly dispersed, inorganic pigments, we synthesized block copolymers containing thermoplastic polycarbonate blocks and polyolefine blocks. The polyolefines produce immiscible phase in polycarbonate and thus render light scattering. Application of melt process for synthesis of polycarbonates allows to use α,ω-dihydroxy- poly(ethylene-butylene), Kraton Liquid HPVM 2203, as a macromonomer in order to build up a light scattering phase in polycarbonate (Schemel). Very low concentrations (~0,2 wt.%) of poly(ethylene-butylene) are sufficient to produce light scattering. Since polyolefine is connected with polycarbonate matrix by covalent bond, regular distribution of the scattering phase can be expected and macroscopic demixing (resulting from the diffusion of polyolefine macromolecules in polycarbonate matrix) cannot occur. Polyolefines have no catalytic activity and they cannot induce any possible degradation process; they are soft so that the surface of the molded article is smooth and no abrasion of a processing equipment is expected. Described light diffusing polycarbonates can also be prepared with high content of the poly(ethylene - butylene) phase (cca 30 wt.%) as a masterbatch. Then the final concentration of the scattering phase is achieved by diluting of the copolymer with a regular polycarbonate (e.g. in extruder). Copolymers with concentration of poly(ethylene-butylene) segments in the range 2-30 wt.% are white colored (measured in 0,2 mm sheets) and showed >99% haze. 0,5 mm thick sample containing 1,15 wt.% Kraton HPVM 2203 showed 75% haze and samples containing 0,2 wt.% Kraton HPVM 2203 showed 65% haze thickness in 1 mm thick plate and 60-63% haze in 2mm thick sheet (the latter sample was prepared from masterbatch by its diluting by Macrolon 1143 in the extruder, see Table 1).

Polycarbonate-co-poly(ethylene - butylene) can be prepared using melt process in temperatures up to 280 °C and pressures 100 mbar- 0,5 mbar. As it is obvious from the Table 1, most of polymers have molecular weight Mn = 20-24 10³ and the index of polydispersity Mw/Mn = 2,2-2,5. As a diol can be used any aromatic or aliphatic diol, for instance 2,2-bis(4-hydroxyphenyl)propan (Bisphenol A), 2,2-bis(4-hydroxy-phenyl)-perfluorpropan, 1,1-bis(4-hydroxyphenyl)cyclohexan, 1,1-bis(4-hydroxy-phenyl)-3,5,5-trimethylcyclohexan (TMC Bisphenol), 4,4'-(1,3-phenylenedi-isopropylide)bisphenol, 4,4'-dihydroxybiphenyl, 4,4'-(1,4-phenylenedi-isopropylide)bisphenol, 4,4'-dihydroxydiphenylsulfide, 1,1-bis(4-hydroxyphenyl)-ethan, 4,4'-dihydroxy-diphenyl, 2,4-dihydroxyphenyl)-2-methyl-butane, α,α'-bis(4-hydroxyphenyl)-p-diisopropylbenzene, 2,2-bis(3-methyl-4-hydroxyphenyl)propane, 2,2-bis(3-chloro-4-hydroxyphenyl)propane, bis (3,5-dimethyl-4-hydroxyphenyl) methane, 2,2-bis(3,5-dimethyl-4-hydroxyphenyl)propane, bis-(3,5-dimethyl-4-hydroxyphenyl)sulfone, 2,4-bis(3,5-dimethyl-4-hydroxyphenyl)-2-methylbutane, 1,1-bis(3,5-dimethyl-4-hydroxyphenyl)cyclohexane, α,α'-bis(3,5-dimethyl-4-hydroxyphenyl)-p-diisopropylbenzene, 2,2-bis(3,5-dichloro-4-hydroxyphenyl) propane, 2,2-bis(3,5-dibromo-4-hydroxyphenyl)propane, 4,4'-dihydroxydiphenylsulfon, 2,6-dihydroxynaphthalin, 2,7-dihydroxynaphthalin, 1,5-dihydroxynaphthalin, 1,6-dihydroxynaphthalin, 4,4'-dihydroxybenzophenone, 2,2',6,6'-tetrabromo-2,2-bis(4-hydroxyphenyl)propane, bis(4-hydroxyphenyl) alkanes (1-25 carbons in alkane chain), 4,4'-dihydroxydiphenylether, 4,4'-dihydroxy-3,3'-dimethyldiphenylether, ethylenglycol-bis(4-hydroxyphenyl)ether, 2,2-bis(4'-hydroxyphenyl)norbornane, 2,2-bis(4'-hydroxyphenyl)adamantane, 6,6'-dihydroxy-3,3,3',3'-tetramethyl-1,1'-spiroindane, hydroquinone, resorcinol, hydrogenated bisphenol A, hydrogenated hydroquinone, hydrogenated resorcinol, 2,2,4,4,-tetramethyl-1,3-cyclobutanediol, m-dihydroxyxylylene, p-dihydroxyxylylene, 3,9-bis(2-hydroxy-1,1-dimethylethyl)-2,4,8,10-tetraoxaspiro[5,5]undecane, 2,4'-dihydroxydiphenylsulhone, 2,2-bis(4-dihydroxy-3-methoxyphenyl)propane, bis(hydroxymethyl)-tricyclo(5,2,1,0^{2,6})decan, 1,4-cyclohexanedimethanol, 1,4-bis-(2-hydroxyethoxy)-2-butin, 4,4'-(9-fluorenyliden)-bis(2-phenoxyethanol), trans-2,3-bis(4-hydroxyphenyl)-2-butene, 2,2-bis(3-cyclohexyl-4-hydroxyphenyl)propane, 1,1-dichloro-2,2-bis(4-hydroxyphenyl)ethylene, 1,1 -dibromo-2,2-bis(4-hydroxyphenyl)ethylene, bis(4-hydroxyphenyl)sulfoxide, 2,7-dihydroxypyrene, 9,9-bis(4-hydroxyphenyl)fluorene, 2,7-dihydroxycarbazole, 2,6-dihydroxytrianthrene, phenolphthalein, indanebisphenol and their mixtures. Five or six membered aliphatic ring containing bisphenols described in patent US 4982014 can also be used as comonomers. Bisphenol A and TMC bisphenol (or their mixtures) are preferably used, most preferably bisphenol A.

Aromatic as well as aliphatic (or alicyclic) alcohols containing more than two hydroxy groups per molecule can be used as a branching (and occasionally crosslinking) agents. In addition to such multifunctional alcohols, e.g. 1,4-bis(4',4'-dihydroxytriphenylmethyl)benzene, nitrogen containing agents, for instance 3,3-bis(4-hydroxyphenol)-2-oxo-2,3-dihydroindole or isatin biscresol, can be also used. In principle, chemical compounds containing more than two alkyl- or aryloxycarbonyl groups can be used for branching ( in higher concentrations as 1 mol. % crosslinking can take place).

For a melt process, carbonic acid diesters are used as monomers; the most important of them are the following compounds: diphenylcarbonate, dimethylcarbonate, ditolylcarbonate, bis(chlorophenyl)carbonate, bis(m-cresyl)carbonate, dinaphthylcarbonate, diethylcarbonate, dibutylcarbonate, dicyclohexylcarbonate etc. Diphenylcarbonate is particularly preferred comonomer.

Instead of α,ω-dihydroxy-poly(ethylene-butylene), other α,ω-dihydroxy-macromonomers can be used, for instance those containing polyacrylate, polymethacrylate (preferably polymethylmethacrylate), polystyrene, polybutadiene, polyether, polydimethylsiloxane, polypropylene, polypropylenecarbonate poly- and oligo- dihexanoylchitin, polyethercarbonate, poly(tetrafluorethyleneoxide-co-difluormethylenoxide) and other structures in the polymer chain.

Following compounds were used as a melt transesterification catalyst: tetraalkylammonium, tetraalkylphosphonium, tetraarylphosphonium phenolates and hydroxides, both aliphatic and aromatic primary, secondary and tertiary amines, imidazoles such as 2-methylimidazole and 2-phenylimidazole, tetramethylammonium borohydride, tetrabutylammonium borohydride, tetrabutylammonium tetraphenylborate, tetramethylammonium tetraphenylborate. Other well known suitable catalysts involved titanium, zinc, tin, antimony and lead compounds. Special attention should be paid of tetrakis(2-ethylhexyl)titanate, titanium (IV) butoxide, titanium isopropoxide, dibutyl tin oxide, tin(IV)oxide, dioctyl tin oxide, dioctyl tin dilaurate, butyl tin hydroxide oxide, octyl tin hydroxide, zinc(IV)oxide, zinc (II)oxide, lead phenolate, lead acetate etc. Other possible catalytic systems are described in EP 837086 and EP 561 630 (and references there): organic acid salts, inorganic acid salts oxides, hydroxides, hydrides, alkoxides, phenolates, of alkali metals and alkaline-earth metals. The most preferred salts are carbonates, stearates, borates, benzoates, hydrogen carbonates and acetates of alkali metals and alkaline-earth metals. The most preferred concentration of catalysts is 100-1000 ppm, but in principle the concentrations can vary in the range of 10⁻⁹-10⁻³ moles of catalysts based on 1 mole of diol.

When tetraphenylphosphonium phenolate was used as a catalyst for synthesis of copolycarbonates containing higher content of Kraton Liquid HPVM 2203 (more than 1 mol%), higher concentration of catalyst were preferably used. For concentrations of Kraton Liquid HPVM 2203 in the range 1,5-2,5 mol %, 3,5 times more of this catalysts, than in the case of copolymers with lower polyolefine content, had to be added into the reactor in order to obtain polymers with weight averages of molecular weights 16400-21800 and Mw/Mn about 2,30. In even higher concentrations of polyolefine, one order of magnitude higher concentrations of tetraphenylphosphonium phenolate are recommended.

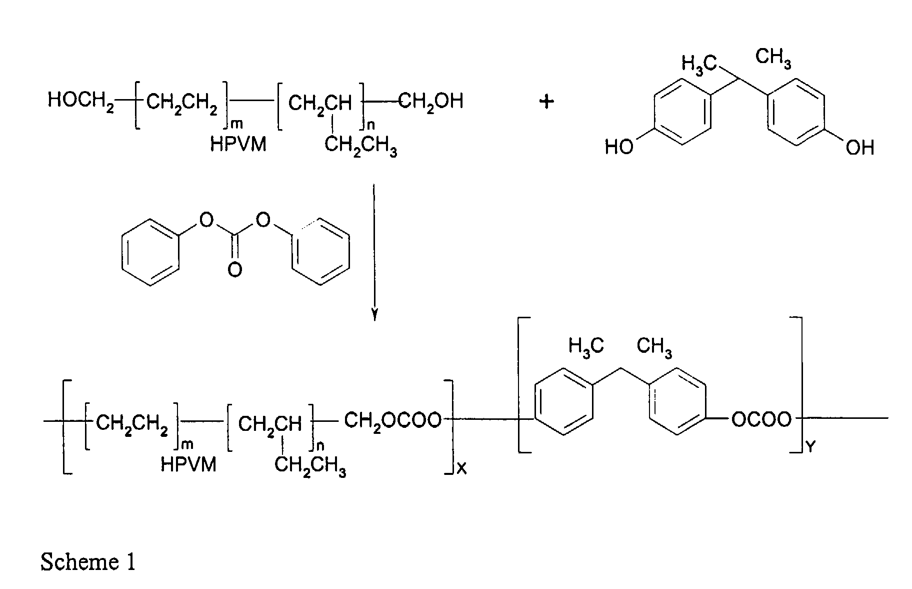

The copolycarbonate resin of the present invention can be mixed with an processing stabilizer, dye, reinforcement, filler, lubricant, release agent, crystal nucleating agent, plasticizer, fluidity improving agent, antistatic agent, etc.

Copolymers can contain 10-500 ppm of white (titanium dioxide, preferably Kronos 2230) or other pigments (iron oxides, ferric ferrocyanide, chromium oxide etc.) and/or UV stabilizers and/or antioxidants such as sulfur containing molecule [ e.g. thioether -based compounds as, for example, dilauryl thiodipropionate, distearyl thiodipropionate, dimyristyl-3,3'-thiodipropionate, pentaerythritol tetrakis(β-laurylthiopropionate), phosphites [e.g. phenyldiisodecylphosphite, phenylisodecylphosphite, triphenylphosphite, trisnonylphenyl phosphite, tricyclohexylphosphite, tricresylphosphite, tris(2,4-ditert.butylphenyl)phosphite, tris(nonylphenyl)phosphite, bis(2,4-di-t.butylphenyl)pentaerythritol diphosphite, bis(2,6-di-t.butyl-4-methylphenyl)pentaerythritol diphospite, 2,2-methylenebis(4,6-di-t.butylphenyl)octyl phosphite, 4,4'-diisopropylidenediphenol alkyl (C12-C15), 4,4'-butylidenebis(3-methyl-6-t.butylphenyl-di-tridecylphosphite) etc.], hindered phenols [e.g. 1,1,3-tris(2-methyl-4-hydroxy-5-t.butylphenyl)butane, 4,4'-butylidenebis(3-methyl-t.butyl-phenol), n-octadecyl-3-(3 ',5'-di-t.butyl-4'-hydroxyphenyl)propionate, pentaerythrityl-tetrakis-(3-(3,5-di-t.butyl-4-hydroxyphenyl)propionate), triethyleneglycol-bis(3-(3-t.butyl-5-methyl-4-hydroxyphenyl)propionate, 1,6-hexanediol-bis(3-(3,5-di-t.butyl-4-hydroxyphenyl)propionate, 2,2'-methylenebis(4-methyl-6-t.butylphenol, 2,2'-methylenebis(4-ethyl-6-t.butylphenol), 2,2'-methylenebis(4-ethyl-6-t.butylphenol), 2-t. butyl-6-(3-t.butyl-2-hydroxy-5-methylbenzyl)-4-methylphenyl acrylate, 2-(1-(2-hydroxy-3,5-di-t.butylphenyl)ethyl)-4,6-di-t.pentylphenyl acrylate, 4,4-thiobis(3-methyl-6-t.butylphenol), 1,3,5-trimethyl-2,4,6-tris(3,5-di-t.butyl-4-hydroxybenzyl)benzene, 2,2-thiodiethylene-bis(3-(3,5-di-t.butyl-4-hydroxyphenyl)propionate, 3,9-bis(2-(3-(3-t.butyl-4-hydroxy-5-methylphenyl)-propionyloxy)-1,1-dimethyl)2,4,8,10-tetraoxaspiro[5,5]undecane etc], hypophosphites, phosphonites and/or diphosphonites, such as tetrakis-(2,4-di-tert. butylphenyl) biphenylene diphosphonite, etc.,
GPC chromatogram showed in the most cases monomodal distribution of molecular weights using both RI and UV detectors indicating absence of Kraton Liquid HPVM 2203. Just few samples showed a tiny shoulder in a retention time of polyolefine. On the other hand, since the concentration of the soft segment decreased after extraction by hexane (as observed by ¹H NMR), the content of poly(ethylene-butadiene) in the individual macromolecules does not seem to be uniform.

As an alternative way, Kraton Liquid HPVM 2203 can be transformed to corresponding α,ω-bis(phenoxycarboxylates) by reaction with phenylester of chlorformic acid (Scheme 2). Such macromonomer can be polymerized in melt with diols and carbonic acid diesters in a common transesterification melt process under above described conditions.

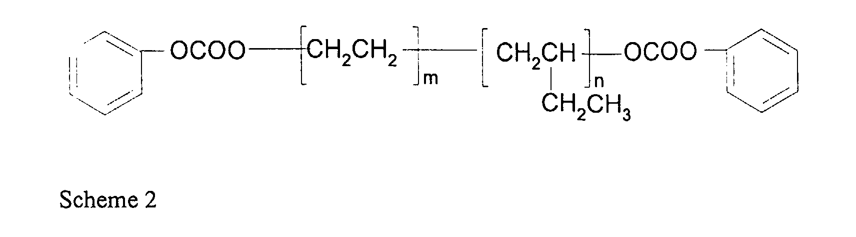

Another possible synthetic route consists in phosgenation process. In this case, the aliphatic hydroxy end-groups of Kraton HPVM 2203 had to be transformed to more reactive acylchloride end-groups. (Scheme 3).

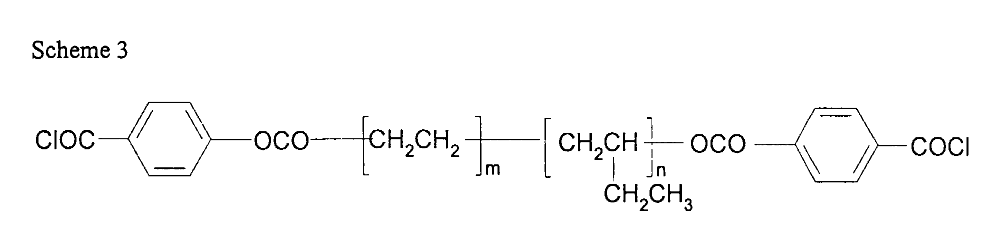

Transformation of hydroxyl groups of Kraton Liquid HPVM 2203 to -COCl groups can be carried out by any dichloride of dicarboxylic acid, but isophthaloylchlorid and terephthaloylchlorid are preferred. Since -COCl groups are vulnerable to hydrolysis, they can be converted to phenolic OH groups by subsequent reaction with any aromatic diol. Bisphenol A is preferred compound for this purpose (Scheme IV).

Thus modified telechelic oligomers Kraton Liquid HPVM 2203 are both high reactive and soluble in chlorinated hydrocarbons and therefore they can be used in interphase polymerization with phosgene and bisphenolate.

Synthesis of polycarbonates by direct reaction of α,ω-terminated hydrogenated polybutadiene with phosgene either using interphase or solution polycondensation process with sodium bisphenolate has already been hypothetically described in other patents [DE 3638272 and GB 2270317A] . We found, that we can not reproduce for example example 16 of GB 2270317 A.

Described polycarbonates-co-poly(ethylene-butylene) can be also prepared by melt transesterification of polycarbonate (Macrolon, Apec, etc) with α,ω-dihydroxypoly(ethylene-butylene) in extruder or kneader. Reaction conditions are analogous to those for reactive blending of polycarbonates with α,ω-dihydroxy-poly(caprolactone-co-siloxanes) [US 5414054], reaction temperatures are the range of 200-350°C, preferably 250-320°C, and above mentioned common transesterification catalysts are applied.

### Examples:

In Table I there are shown basic characteristics of polycarbonates containing less than 0,04 mol% (i.e. 0,52 wt.%) HPVM 2203. Samples 612 and 614 were prepared from the master-batch by diluting with Macrolon 1143 either in extruder (MMV-614) or in kneader (MMV-612). As can be seen in Table I haze and transmittance can be easily regulated by concentration of the polyolefine. In the Table I, total transmittance data are summarized in two different wavelength, since the transmittance strongly depends on the wavelength. Mixing of polyolefine such as HPVM -2203 directly with polycarbonate (it means without its incorporation into polycarbonate chain) in kneader or extruder is very difficult since this oligomers is very sticky. On the other hand, when 0,56 wt.% is succesfully incorporated into Macrolon 1143 (for instance in kneader), the optical properties are excellent: haze 96% and total transmittance 41 (450 nm) and 57% (700 nm) respectively.

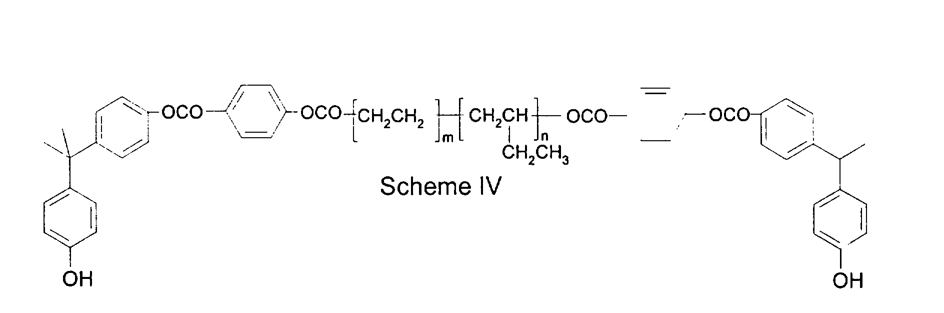

**Table I.**

| Basic characteristics of multiblock polycarbonate-co-poly(ethylene-butylene) copolymers. | | | | | | | | |
|---|---|---|---|---|---|---|---|---|
| Sample MMV- | Kraton HPVM cont. wt.% | Kraton HPVM cont. mol.% | Mn | Mw | Mw/Mn | Haze (%) | Total Transmittance (%) at 450 nm | Total Transmittance (%) at 700 nm |
| 574 | 0,065 | 0,005 | 10350 | 23170 | 2,24 | 34 | 85 | 88 |
| 575 | 0,065 | 0,005 | 9330 | 20590 | 2,20 | 44 | 82 | 88 |
| 568 | 0,13 | 0,01 | 10780 | 24250 | 2,25 | 33 | 81 | 86 |
| 569 | 0,13 | 0,01 | 9644 | 23620 | 2,45 | 24 | 82 | 87 |
| 576 | 0,13 | 0,01 | 10010 | 22690 | 2,26 | 49 | 79 | 86 |
| 614* | 0,26 | 0,02 | --------- | --------- | --------- | 63 | ----------- | ---------- |
| 612** | 0,26 | 0,02 | ------- | -------- | --------- | 60 | ----------- | ---------- |
| 579 | 0,39 | 0,03 | 10690 | 23690 | 2,21 | >90 | 62 | 77 |
| 571 | 0,39 | 0,03 | 8435 | 19380 | 2,30 | 92 | 63 | 77 |
| 572 | 0,52 | 0,04 | 9255 | 20130 | 2,21 | >95 | 53 | 71 |
| 573 | 0,52 | 0,04 | 6920 | 16720 | 2,42 | >99 | 52 | 68 |

| | | | | | | | | |
|---|---|---|---|---|---|---|---|---|
| * Prepared from the master-batch MMV-262 (30 wt-% polyethylenebutylene) by its diluting with Macrolon 1143(polycarbonate) | | | | | | | | |
| **Prepared from the master-batch MMV-244 (55 wt-% polyethylenebutylene) by its diluting with Macrolon 1143 (polycarbonate) | | | | | | | | |

### Mechanical properties of polycarbonate-co-poly(ethylene -butylen)

Stress - strain experiments, TMA and impact resistance determination were carried out in order to compare deformation and other properties of HPVM 2203 containing polycarbonate with Macrolon 1143. In spite of some decrease of E-modul and impact strength the mechanical properties seems to be sufficient for intended applications such as e.g. double-layered sheets for sunroofs etc.

Besides glass transition temperatures summarized in the Table II, TMA was able to reveale some broad maxima of G" at -100 °C and 70°C. These peaks obviously resulted from other relaxation transitions (γ and β relaxations). During stress-strain experiment plastic deformation took place and stress-whitening, probably due to crazing in the environment of demixed polyolefine microphase, occurred.

**Table II.**

| Mechanical and other properties of polycarbonate-co-poly(ethylene-propylen) determined from stress-strain experiment and TMA | | | | |
|---|---|---|---|---|
| Sample | Unit | 728 | 730 | Polycarbonate |
| Composition | | 0,45 wt. % HPVM in PC Polycarbonate + master-batch 262 | 0,60 wt. % HPVM in PC Polycarbonate + master-batch 262 | |
| E-Modul | MPa | 1890 | 1900 | 2400 |
| Yield stress | MPa | 61 | 61 | 63 |
| Tensile strain at yield | % | 7 | 7 | 6 |
| Tensile strength at break | % | 67 | 69 | >50 |
| CHARPY impact strength | KJ/m² | 130 | 137 | No break |
| Tg | °C | 147 | 148 | 148 |

### Melt polymerization of DPC with bisphenol A and Kraton Liquid HPVM 1203 and optical properties of thus prepared A-B-A copolymers

Synthesis of polycarbonates in the melt using monofunctional HPVM 1203 as a end-capper leads to formation of A-B-A triblock copolymers (A=HPVM, B=PC). The reaction proceeds according to the Scheme VI under analogous conditions to those of bifunctional Kraton Liquid Shall HPVM 2203. The basic characteristics of the A-B-A copolymers are shown in Table III. Same comonomers, catalysts, UV absorbers, antooxidants, pigments can be used ( and in the same concentrations) as in the case of multiblock copolymers. The copolycarbonate resin of the present invention can be mixed with an processing stabilizer, dye, reinforcement, filler, lubricant, release agent, crystal nucleating agent, plasticizer, fluidity improving agent, antistatic agent, etc.

Besides copolymer also blends were prepared by blending of master-batch (MMV-714) with Macrolon 1143. Optical properties of blends are summarized in Table V. From the comparison of the haze and the total transmittance values in the Table IV and Table V it is obvious that blends of master-batch with Macrolon 1143 have considerably lower haze than the copolymers if the content of HPVM 1203 is lower than 0,3 wt.%. On the other hand, total transmittance is by roughly 15% higher than in the case of copolymers.

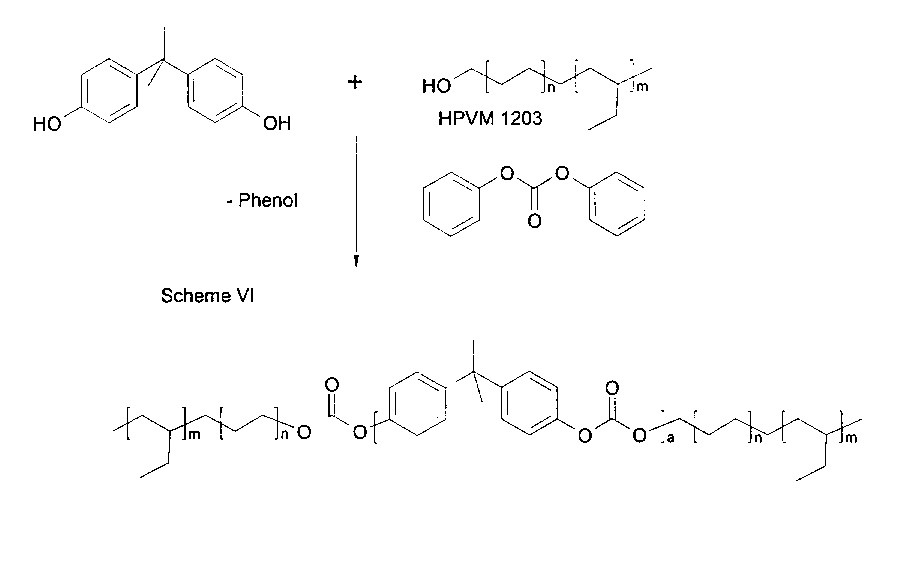

**Table III.**

| Molecular weight characterization and optical properties of poly(ethylen-butylene)-co-polycarbonate-co-poly(ethylene-butylene) A-B-A copolymers | | | | | | | | |
|---|---|---|---|---|---|---|---|---|
| Sample MMV- | HPVM 1203 Wt.% | HPVM 1203 Mol.% | Mn | Mw | Mw/Mn | Haze (%) | Total transmittance (%) at 450nm | Total transmittance (%) at 700nm |
| 682 | 0,05 | 0,0041 | 11190 | 25050 | 2,23 | 96 | 41 | 57 |
| 673 | 0,065 | 0,0053 | 8856 | 21420 | 2,42 | ---------- | ---------- | ---------- |
| 674 | 0,13 | 0,0106 | 8957 | 19430 | 2,17 | >99 | 43 | 58 |
| 675 | 0,20 | 0,0163 | 10490 | 23350 | 2,22 | ---------- | ---------- | ---------- |
| 676 | 0,26 | 0,0213 | 10360 | 23020 | 2,22 | >99 | 39 | 55 |
| 677 | 0,30 | 0,0245 | 10870 | 24170 | 2,22 | ---------- | ---------- | ---------- |
| 678 | 0,39 | 0,0319 | 10390 | 23760 | 2,29 | >99 | 31 | 46 |
| 679 | 0,45 | 0,0369 | 9534 | 21190 | 2,22 | ---------- | ---------- | ---------- |
| 680 | 0,52 | 0,0391 | 12080 | 27780 | 2,30 | ---------- | ---------- | ---------- |
| 681 | 0,60 | 0,0492 | 10610 | 23710 | 2,18 | >99 | 24 | 37 |
| 714 | 12,26 | 1,0000 | 7525 | 18550 | 2,42 | ---------- | ---------- | ---------- |

These differences between the haze of copolymer and blend are decreasing with increasing concentration of HPVM 1203 in the material, but the total transmittance of blends is in all cases higher.

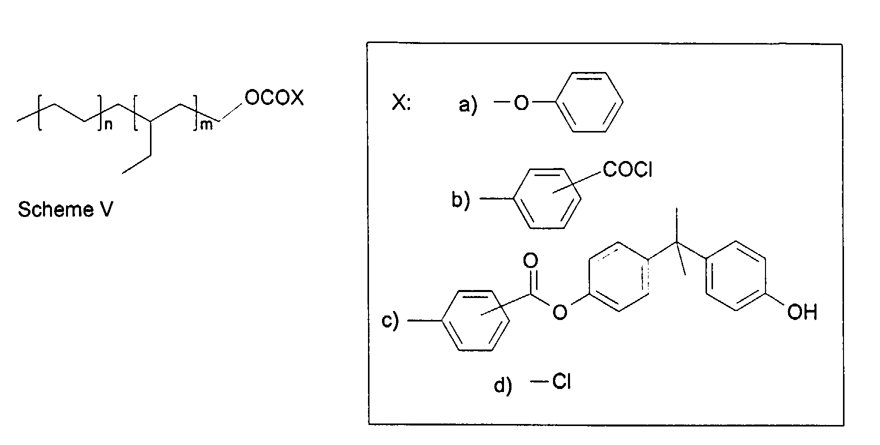

**Table IV.**

| Optical characterization of blends of master-batch MMV-714 and Macrolon 1143(polycarbonate) | | | | | |
|---|---|---|---|---|---|
| Sample | HPVM1203 Wt.% | HPVM1203 Mol.% | Haze (%) | Total Transmittance (%) at 450 nm | Total Transmittance (%) at 700 nm |
| 721 | 0,05 | 0,0041 | 41 | 51 | 67 |
| 722 | 0,065 | 0,0053 | 36 | 63 | 76 |
| 723 | 0,13 | 0,0106 | 45 | 57 | 73 |
| 724 | 0,20 | 0,0163 | 70 | 47 | 66 |
| 725 | 0,26 | 0,0213 | 91 | 42 | 59 |
| 726 | 0,30 | 0,0245 | 95 | 40 | 58 |
| 727 | 0,39 | 0,0319 | 98 | 37 | 55 |
| 728 | 0,45 | 0,0369 | >99 | 32 | 48 |
| 729 | 0,52 | 0,0391 | >99 | 32 | 47 |
| 730 | 0,60 | 0,0492 | >99 | 36 | 54 |

Aliphatic hydroxy end-groups can be transferred to other reactive end-groups in order to modify the reactivity of the end-capper or in order to apply other reaction conditions e.g. phosgenation process. The most important end-groups are summarized in Scheme V. Such modified poly(ethylene-butylene) can be prepared by analogous way as in the case of α,ω-dihydroxy-polyolefine: this means by reaction of primary aliphatic OH group with isopthaloylochlorid or terephthaloylchlorid or phosgen or phenoxycarbonylchlorid. Other possibility is transfer of aliphatic hydroxy- group to -COCI group by reaction with iso- or terephthaloylchloride and subsequent reaction with excess of bisphenol A in order to obtain aromatic hydroxy-groups.
Instead of α-hydroxy-poly(ethylene-butylene), other α-hydroxy-macromonomers can be used, for instance those containing polyacrylate, polymethacrylate (preferably polymethylmethacrylate), polystyrene, polybutadiene, polyether, polydimethylsiloxane, polypropylene, polypropylenecarbonate poly- and oligo-dihexanoylchitin, polyethercarbonate, poly(tetrafluorethyleneoxide-co-difluormethylenoxide) and other structures in the polymer chain.

### Example 1

Three neck flask equipped with distillation column, mechanical stirrer and indicator of temperature was charged with 182,58 (0,7998 mol) Bisphenol A, 0,8g (0,0002mol) Kraton HPVM 2203, 176,5g (0,824mol) diphenylcarbonate and 2,058g of catalyst (5% solution of tetraphenylphosphoniumphenolate in butanon) and then heated up to 150°C and at pressure 100 mbar. When the condensation of phenol in the distillation column started, the temperature of the stirred mixture was increased to 220°C. In 10-15 minutes, the pressure was decreased to 60 mbar and the temperature was increased to 235°C. After 10 minutes, when the pressure decreased to 10 mbar, the temperature was increased to 250°C. Then the reaction mixture was maintained for 60 minutes at the temperature 280°C and the pressure 0,5 mbar. The copolymer thus prepared had Mw=23670 and Mw/Mn= 2,21.

### Example 2

Three neck flask equipped with distillation column, mechanical stirrer and indicator of temperature was charged with 44,13g (0,206 mol) diphenylcarbonate, 44,52g (0,195mol) bisphenol A, 16,75g (0,005mol) Kraton Liquid HPVM 2203 and 0,017g of catalyst (5% solution of tetraphenylphosphoniumphenolate in butanon) and then heated to 150°C at pressure 100 mbar. When the condensation of phenol in the distillation column started, the temperature of the stirred mixture was increased to 220°C. In 10-15 minutes, the pressure was decreased to 60 mbar and the temperature was increased to 235°C. After 10 minutes, when the pressure decreased to 10 mbar, the temperature was increased to 250°C. Then the reaction mixture was maintained for 60 minutes at the temperature 280°C and the pressure 0,5 mbar. The copolymer thus prepared had Mw=21000 and Mw/Mn= 2,50.

### Example 3

4,3g (0,021 mol) of terephthalolylchlorid was dissolved under nitrogen in 250 ml of methylenchlorid and then 33,50g (0,01mol) of Kraton HPVM 2203, 1,66g (0,021mol) pyridine dissolved in 51 ml of methylenchlorid was dropwise added into the reaction mixture so that the reaction temperature did not exceed 5°C. After all Kraton HPVM 2203 was added, the reaction mixture was heated up to room temperature and stirred for 5 hours.

Then 117,5 g of this solution was dropwise added into the mixture of bisphenol A 28,48g (0,1248 mol), 44,45g sodium hydroxide (45%), 300 ml of water and 300 ml of methylenchlorid at 20-25°C and then the reaction mixture was stirred for 30 minutes. Then 13 ml (0,1875 mol) of phosgene was added, maintaining pH 13. Finally 0,343 ml of N-ethylpiperidine was added under nitrogen stream into the reactor and reaction was allowed to proceed under stirring for 60 minutes. Then the organic phase was separated, washed with 10% HCl and then with water and after drying the solvent was removed by rotary evaporator.

The polymer thus prepared had Mw = 112400 and Mw/Mn = 6,66.

### Example 4

4,3g (0,021mol) of terephthalolylchlorid was dissolved under nitrogen in 250 ml of methylenchlorid and then 33,50g (0,01mol) of Kraton HPVM 2203, 1,66g (0,021mol) pyridine dissolved in 51 ml of methylenchlorid was dropwise added into the reaction mixture so that the reaction temperature did not exceed 5°C. After all Kraton HPVM 2203 was added, the reaction mixture was heated up to room temperature and stirred for 5 hours. Then, 185 g of this solution was slowly added under nitrogen stream into the mixture of 4,80g (0,021 mol) bisphenol A, 0,83 g pyridine and 20,50 ml of methylenchlorid at temperature 10°C. After 30 minutes the temperature was increased to 20-25°C and the reaction was allowed to proceed for 5 hours.

117,5g of this solution was dropwise added into the mixture of bisphenol A 28,48g (0,1248 mol), 44,45g sodium hydroxide (45%), 300 ml of water and 300 ml of methylenchloride at 20-25°C and then the reaction mixture was stirred for 30 minutes in the presene of transesterification catalysts. Then 13 ml (0,1875 mol) of phosgene was added, maintaining pH 13. Finally 0,343 ml of N-ethylpiperidine was added under nitrogen stream into the reactor and reaction was allowed to proceed under stirring for 60 minutes. Then the organic phase was separated, washed with 10% HCl and then with water and after drying the solvent was removed by rotary evaporator. The polymer thus prepared had Mw = 70620 and Mw/Mn = 5,72.

### Example 5

167,5g (0,05 mol) of Kraton Liquid HPVM 2203 is dissolved in 1000 ml of dried methylenchlorid containing 5,14g (0,065mol) of pyridine and the solution is cooled to 0-5°C. Then, phenylester of chlorformic acid (6,11g = 0,05 mol) was added at 5-10°C. After that, the reaction mixture was refluxed for 5 hours and then let overnight at room temperature. The product was washed with 200ml of 5% HCl and then with pure water. Organic phase was separated and the solvent was removed by rotary evaporation.

Then 1,5g (0,00043 mol) of the product was molten with 46,99g (0,22 mol) diphenylcarbonate and 48,61g (0,213 mol) bisphenol A and the mixture was heated under low pressure as it is described in the Example I.

### Example 6

Kraton Shell HPVM 2203 (0,25 wt.%) and polycarbonate Macrolon 1143 (99,75 wt.%) were reactive blended in Haake Rheomex TW 100 extruder (connected with Haake Rheocord 90 processing unit) at 280°C and 60 rpm in the presence of dibutyltioxide (450 ppm) as a catalyst.

### Example 7

Polycarbonate containing 30 wt.% of poly(ethylene-butylene) structures was used as a materbatch and after compounding with Macrolon 1143 it was extruded (38 rotations/min) with the same type of Macrolon in order to fabricate double-sheet layers. The temperature in the entry of the extruder was 270 °C , in the first zone of the extruder was the temperature 280 °C, in the second zone was the temperature 270 °C, in the third one 260 °C and 4-6 zones and the outlet were kept at the temperature 250 °C.

### Example 8

Three neck flask equipped with distillation column, mechanical stirrer and indicator of temperature was charged with 68,486 (0,29999 mol) Bisphenol A; 0,0038g (0,00001 mol) Kraton HPVM 1203; 66,19398g (0,309 mol) diphenylcarbonate and 0,5145g of catalyst (5% solution of tetraphenylphosphoniumphenolate in butanon) and then heated up to 150°C and at pressure 100 mbar. When the condensation of phenol in the distillation column started, the temperature of the stirred mixture was increased to 220°C. In 10-15 minutes, the pressure was decreased to 60 mbar and the temperature was increased to 235°C. After 10 minutes, when the pressure decreased to 10 mbar, the temperature was increased to 250°C. Then the reaction mixture was maintained for 60 minutes at the temperature 280°C and the pressure 0,5 mbar. The A-B-A copolymer thus prepared had Mw= 25050 and Mw/Mn=2,24.

## Claims

1. Copolymer with a component C1 with at least one mono- or α,ω-dihydroxy-polyolefine and a component C2 with at least one polycarbonate where the content of polyolefine segment is in the range 0,005- 60 wt.%

2. Copolymer of claim 1, where the component C1 is a monohydroxy-polyolefin and the content of polyolefin segment is in the range of 0,005 - 30 wt.-% preferably 0,005-20 wt. %, more preferably 0,2-0,8 wt.-%.

3. Copolymer of claim 1, where the component C1 is a α,ω-dihydroxy-polyolefin and the content of polyolefin segment is in the range of 0,005 - 50 wt.-% preferably 0,01-30 wt. %, more preferably 0,1-1 wt.-%.

4. Copolymer of claim 3, where the component C1 comprises α,ω-dihydroxy-poly(ethylene-butylene) or hydrogenated α,ω-dihydroxy- polybutadiene, where the ratio of polyethylene units and polybutylene units is between 10:1 and 1:10, preferably 5:1 and 1:5 and most preferably between 2:1 and 1:2 by weight.

5. Copolymer of claim 4, where the α,ω-dihydroxy- poly(ethylene-butylene) is Kraton Liquid HPVM 2203.

6. Method of preparation of a copolymer according to one of the claims 1 to 5 via melt condensation of diester of carbonic acid, preferably diphenylcarbonate, and aromatic or aliphatic diol, preferably aromatic diol and at least on mono- or a,co-dihydroxy- polyolefine.

7. Method of preparation of a copolymer according to one of the claims 1 to 5 via reaction of at least on mono- or α,ω-dihydroxy- polyolefine with at least twice more moles of iso- or terephthaloylchlorid in methylenchlorid preferably exactly twice more moles, then with at least twice more moles of sodium(potassium) bisphenolate preferably exactly twice more moles and subsequent application of interphase polymerization involving phosgene and sodium (or potassium) bisphenolate.

8. Method of preparation of a copolymer according to one of the claims 1 to 5 by reactive blending of at least on mono- or α,ω-dihydroxy- polyolefine with polycarbonate in the extruder in the presence of transesterification catalysts.

9. Composition containing a copolymer of at least one of the claims 1 to 5.

10. Composition according to claim 9 further containing pure polycarbonate in an amount of 0.1 to 99.9 wt% of the whole composition.

11. Composition according to claim 9 or 10 further containing other common additives, preferably titanium dioxide or other pigment, more preferably in the concentrations up to 0,5wt.%.

12. Method of preparation of a composition according to claim 9, 10 or 11 via blending of a polymer, preferably a polycarbonate with a copolymer according to at least on of the claims 1 to 5, preferably in the extruder.

13. Double sheet layers or multiple sheet layers containing one of the compositions of claim 9,10 or 11.

14. Double sheet layers or multiple sheet layers according to claim 13 further containing a UV-protected layer.

15. Objects containing copolymers of any of claim 1 to 5 or compositions according to any of claim 9 to 11, preferably luminaries, illuminated signs esp. backlit translucent signs, skylights, automotive sunroofs and covers for automotive lights.

16. Synthesis of α,ω-bis(phenoxycarbonyloxy)poly(ethylen-butylene) by reaction of α,ω-dihydroxy-poly(ethylene-butylene) with C₆H₅COCl.

17. Method of preparation of a copolymer according to claims 1,3,4,5 via melt condensation of diester of carbonic acid, preferably diphenylcarbonate, and aromation or aliphatic diol and α,ω-bis(phenoxycarbonyloxy)poly(ethylen-butylene).

18. Synthesis of α-phenoxycarbonyloxy-poly(ethylen-butylene) by reaction of α-ηydroxy-poly(ethylene-butylene), preferably Kraton Liquid HPVM 1203, with C₆H₅COCl.

19. Method of preparation of a copolymer according to claims 1 and 2 via melt condensation of diester of carbonic acid, preferably diphenylcarbonate, and aromation or aliphatic diol and α-phenoxycarbonyloxy-poly(ethylen-butylene).
